# FASCICULE DE BREVET EUROPEEN

(11) **EP 0 833 574 B1**
(45) Date de publication et mention de la délivrance du brevet: **02.11.2000**
(21) Numéro de dépôt: 96922956.6
(22) Date de dépôt: 20.06.1996
(51) Int. Cl.: A41D 13/00

(54) **DISPOSITIF DE SECURITE POUR MOTOCYCLISTE**
SCHUTZVORRICHTUNG FÜR MOTORRADFAHRER
SAFETY DEVICE FOR MOTORCYCLISTS

(30) Priorité: 21.06.1995 FR 9507402
(43) Date de publication de la demande: 08.04.1998
(73) Titulaire: Bultel, Alain, 38130 Echirolles (FR); Clement, Frédéric, 38120 Saint-Egrève (FR)
(72) Inventeur: Bultel, Alain, 38130 Echirolles (FR); Clement, Frédéric, 38120 Saint-Egrève (FR)
(74) Mandataire: Viard, Jean
(86) Numéro de dépôt international: FR9600953
(87) Numéro de publication internationale: WO9700624

(56) Documents cités:
- EP-A- 0 051 254
- GB-A- 1 524 022
- GB-A- 1 588 919
- US-A- 3 930 667
- US-A- 4 984 821
- US-A- 5 055 058
- US-A- 5 073 860
- US-A- 5 362 098

## Description

La présente invention a pour objet un procédé et un dispositif de sécurité pour un motocycliste, conducteur et/ou passager d'une moto et pour la moto elle-même.

Afin d'accroître la sécurité dans les automobiles, il est connu maintenant de disposer d'un dispositif dit "airbag" ou "coussin d'air". En cas de choc violent, celui-ci est détecté par une centrale qui déclenche le gonflement automatique d'un sac par mise à feu d'une capsule pyrotechnique libérant une réserve d'air comprimé. Ce gonflage intervient dans un délai de l'ordre de 9 millièmes de seconde ce qui permet d'éviter tout choc traumatisant.

Un dispositif de ce genre ne peut être envisagé pour un motocycliste, conducteur ou passager, en raison de la structure du véhicule. Dans une voiture, en cas de choc violent, les passagers munis de ceinture de sécurité restent à l'intérieur de la carrosserie alors que sur une moto les passagers sont éjectés. Ils se retrouvent au sol après d'une course plus ou moins longue. Le contact avec le sol est quelquefois mortel mais, en raison de la vitesse, il est toujours traumatisant.

La présente invention a pour objet de pallier cet inconvénient et d'éviter des contacts mortels.

Il a déjà été proposé dans US-A-4 984 821 de munir un motocycliste d'une combinaison ou d'une partie de combinaison gonflable. En cas d'accident, si le motocycliste est éjecté, un cordon actionne un contacteur qui déclenche la mise à feu d'une capsule pyrotechnique libérant de l'air sous pression qui gonfle la combinaison. Toutefois, ce système très simple ne présente que des possibilités limitées au regard de la sécurité et, en particulier, le motocycliste doit penser à mettre le dispositif en route à l'aide d'un interrupteur.

Selon l'invention, le dispositif de sécurité pour motocycliste comprenant une combinaison gonflable s'interposant entre le motocycliste et le sol, le gonflage de la combinaison étant déclenché par un capsule pyrotechnique est caractérisé en ce qu'on prévoit :
- sur la moto une centrale électronique, reliée à des détecteurs,
- sur la combinaison des moyens pour provoquer le gonflage de la combinaison;
- et une attache reliant la centrale à la combinaison,
la mise à feu de la capsule résultant de la rupture de l'attache se traduisant par l'envoi d'un signal émis par la centrale vers le dispositif de mise à feu.

Ainsi, à partir du moment où le pilote et/ou le passager sont éjectés de la moto, la ou les combinaisons se gonflent. Le pilote et le passager sont reliés à la moto par une attache de sécurité. Si, lors d'une chute, le pilote est éjecté, le passager l'est généralement aussi et c'est alors qu'intervient le gonflage des boudins des combinaisons. Si seul le passager est éjecté, seule la combinaison du passager se gonfle. La commande du gonflage provient ainsi de la détection d'un contacteur intégré dans l'attache de sécurité. Lorsque l'attache est séparée en deux parties sous l'action d'une force déterminée , partie moto d'une part et, combinaison d'autre part, le contacteur détecte cette séparation et envoie à la centrale une information de la séparation de l'attache ou crochet. A son tour et en fonction de conditions qui seront définies ultérieurement, la centrale émet vers la combinaison, par un signal radio ou autre, une commande d'explosion d'une première capsule pyrotechnique puis, éventuellement, après un temps variable en fonction de la vitesse, une seconde commande d'explosion de la seconde capsule pyrotechnique. Dans un autre mode de réalisation, c'est la rupture elle-même de l'attache, sous l'action d'une force étalonnée, qui provoque la mise à feu. Dans les deux cas, c'est la rupture de l'attache qui déclenche la mise à feu et le gonflage.

D'autres caractéristiques et avantages de l'invention apparaîtront au cours de la description qui va suivre d'un mode particuliers de réalisation, donné uniquement à titre d'exemple non limitatif, en regard des figures qui représentent :
- La figure 1, une vue par blocs de la centrale se trouvant sur la moto et de ses éléments périphériques ;
- les figures 2a à 2c, l'attache moto combinaison dans les trois cas de fonctionnement ;
- la figure 3, une vue schématique de la combinaison ;
- la figure 4, un schéma électronique de fonctionnement de la centrale.
- la figure 5, un autre mode de réalisation de l'attache.

Sur le châssis de la moto est fixée, par exemple sous la selle, la centrale électronique incluant un microprocesseur 1 et un étage de traitement la. De préférence, cette centrale est incluse dans un boîtier en matière plastique non cassant et inflammable est sensible à la projection d'eau, à l'humidité et à la chaleur. Cette centrale est connectée: à la bobine 2 de la moto, à un détecteur tachymétrique 3 disposé sur la roue, à un détecteur d'inclinaison 3a, à des détecteurs 4,5 et 6 de présence d'au moins un passager sur la moto, à la clé de contact 22a et à un relais 22. Le raccordement à la bobine 2 indique que le moteur est en marche et le détecteur de roue 3 indique que la moto est en déplacement. La présence de ces deux conditions est nécessaire au fonctionnement du dispositif de sécurité selon l'invention. En effet, le pilote ou son passager doivent pouvoir se détacher au repos sans que se produise un gonflage des boudins. Le détecteur de roue 3 permet de calculer la vitesse du véhicule et c'est en fonction de cette vitesse qu'interviendront les deux explosions mentionnées précédemment. En effet, plus la vitesse est élevée, plus il sera nécessaire de disposer d'un amortissement conséquent et par suite, de gonfler les boudins de la combinaison. Mais une seule explosion, provoquant un gonflage déterminé de la combinaison peut être suffisante.

Par ailleurs, la centrale 1 est connectée par une liaison 20 à des attaches 4,5,6 permettant de relier une ou des combinaisons 7 à la centrale. Le conducteur est relié par l'attache 4, lorsqu'il y a un passager, celui-ci s'accrochera à l'aide d'une attache 5 et dans le cas d'un side-car et prévue une troisième attache 6. Ces attaches constituent des détecteurs de présence d'une de deux ou de trois personnes sur la moto. Il est possible de programmer le microprocesseur 1 pour que la moto ne puisse être mise en marche que lorsqu'au moins une attache est verrouillée ce qui implique un usage obligatoire de la combinaison gonflable pour rouler comme c'est le cas avec certaines ceintures de sécurité. Les entrées 3,3a, 4,5 et 6 sont connectées à la centrale 1 par l'intermédiaire d'une carte 21. Le microprocesseur saura, en cas d'accident, quelle ou quelles personnes ont été éjectées par identification des attaches rompues. C'est uniquement ce signal de séparation qui déclenchera le gonflage d'une combinaison, la moto pouvant continuer son chemin pendant un certain temps en générant des impulsions 2 et 3.

La centrale électronique 1 peut, par ailleurs être connectée à un émetteur 30 émettant, en direction de l'une des combinaisons, un signal de mise à feu. Elle peut être également reliée, en tant que de besoin à une liaison 33 de type RS 232 à un dispositif d'alarme 34 tel qu'une sirène et à un indicateur optique 35 dont les fonctions seront indiquées ci-après.

La présence d'un microprocesseur dans la centrale 1 permet d'équiper la moto d'un dispositif antivol et dans ce cas, la centrale inclût également un récepteur 30a pouvant recevoir un signal émis par une télécommande à infrarouge 30b qui débloque le verrouillage soit de l'alimentation de la bobine, soit de l'alimentation du moteur en carburant par l'intermédiaire du relais 22, si la fermeture du contact d'alimentation provoque une telle inhibition. Bien entendu, la clé de contact 22a est montée en parallèle sur la commande infrarouge 30a,30b.

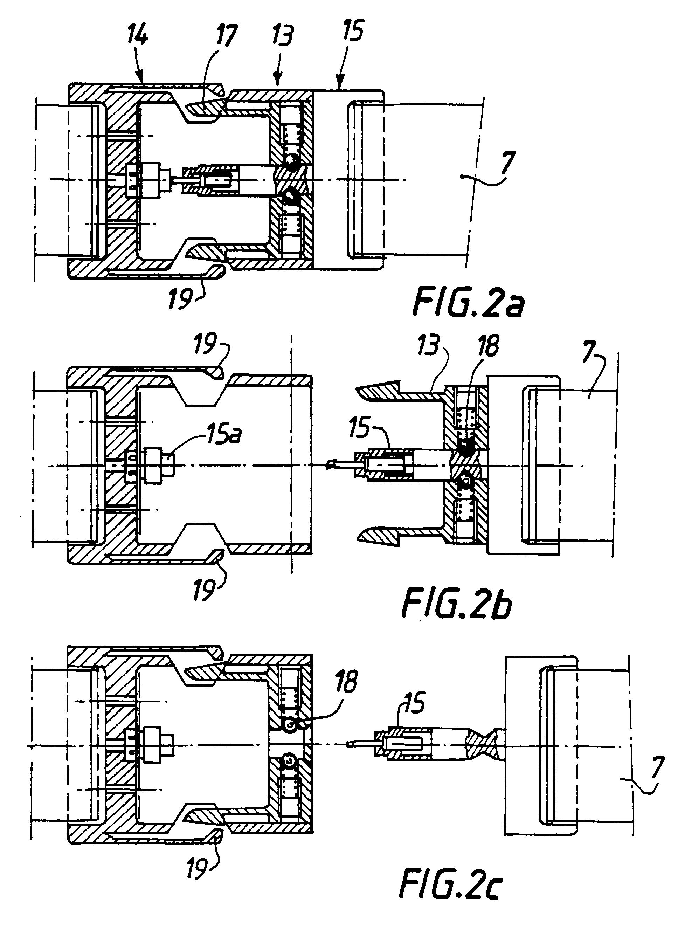

Comme cela apparaît sur les figures 2a à 2c, une attache 4, 5 ou 6 est composée de trois éléments : un élément 14, de type femelle relié à la moto, un élément 15 mâle relié à la combinaison et, entre les deux un élément intermédiaire 13. L'élément intermédiaire 13 porte les contact mâle 16 pouvant s'insérer dans un contacteur femelle 16a La figure 2a représente une attache lors d'un trajet du conducteur; la figure 2b, la même attache lors d'une séparation normale entre le conducteur et la moto; la figure 2c, la séparation de l'attache en deux parties lors d'un choc ou accident au cours duquel le conducteur (ou un passager) est éjecté de la machine.

Sur la figure 2a, la partie mâle 15 est encliquetée dans la partie femelle 14 par les crochets 17. Une traction manuelle relativement lente permet de décrocher la partie 13 de la partie 14 en appuyant sur les crochets 17 par les bras 19. On retrouve alors la position représentée sur la figure 2b permettant au conducteur de descendre de la machine, le contacteur 15 restant solidaire de la partie mâle 13. De toute façon le détecteur 3 empêche à ce moment toute mise à feu puisqu'il signale que le véhicule est à l'arrêt, même si le moteur tourne encore.

Par contre, en cas d'éjection brutale, la partie intermédiaire 13 reste emprisonnée dans la partie femelle 14 et la combinaison 7 arrache le contacteur 16 de son logement 16a. Ce cas est représenté sur la figure 2c. Le contacteur 16 initialement maintenu par des billes 18 armées par des ressorts calibrés, glisse sur ces billes et coupe le contact avec 16a, information qui est transmise au microprocesseur 1 par la ligne 20. L'émetteur 30 émet alors un signal qui est capté par la combinaison ce qui déclenche le gonflage des boudins. Les attaches 5 et 6 sont de même type que celui de l'attache 4 et leur fonctionnement est identique.

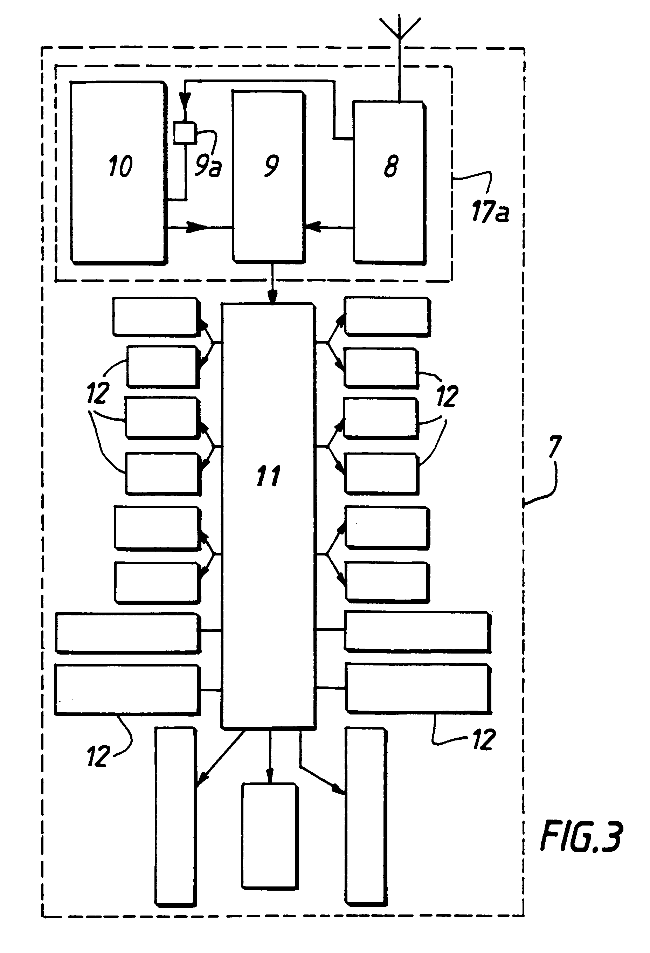

Comme cela est représenté sur la figure 3, la combinaison 7 comprend une carte de réception 8 recevant les signaux de la centrale 1 en cas de rupture de l'attache 4. La carte récepteur 8 commande directement un système pyrotechnique 9a. Le système pyrotechnique est relié à une bouteille d'air comprimé 10 suivie d'un détendeur permettant de passer d'une pression de 200 à une pression de 8 bars après un temps qui peut dépendre de la vitesse du véhicule au moment de l'éjection, vitesse qui est calculée par la centrale en fonction des impulsions du capteur de roue 3. L'émetteur 30 peut envoyer à la carte 8 un second signal qui agit directement sur une vanne incluse dans l'étage 9 et qui obture le passage de l'air vers le répartiteur. L'ensemble des éléments 8, 9, 9a et 10 est inclus dans un sac de type banane 7a porté par le motocycliste et éventuellement son passager. La bouteille d'air est reliée, après explosion de 9a, à un répartiteur d'air 11 qui a pour but de distribuer celui-ci dans différents boudins 12 prévus dans la combinaison. Ces boudins sont équipés d'un clapet anti-retour (non représenté) ce qui les isole les uns des autres, de sorte que si lors du choc, ou avant celui-ci, l'un des boudins est percé, les autres assurent néanmoins une protection convenable.

De part et d'autre du corps sont prévus un boudin de péroné, un boudin de tibia, deux boudins de fémur, un boudin de cubitus, un boudin de radius, un boudin pour les côtes et le sternum, un boudin pour les côtes et les vertèbres lombaires et un boudin pour l'humérus et la clavicule. Un boudin unique est prévu pour la protection des vertèbres cervicales. Dans l'exemple représenté, la combinaison, de préférence en cuir, est munie de 19 boudins. La tête est, bien entendu, protégée par le casque. Comme dans le cas d'un "airbag" ou coussin d'air, le gonflage des boudins nécessite environ 9 millièmes de seconde ce qui assure un gonflage avant impact sur le sol. Les 19 boudins diminuent uniquement les gros risques de lésions externes tels que : enfoncement de la cage thoracique, fracture de la colonne vertébrale ou des vertèbres cervicales ou toutes les fractures ouvertes des membres supérieurs ou inférieurs. Le récepteur 8, les capsules pyrotechniques, le détendeur et la bouteille 10 sont inclus dans une coque en fibre de verre et protégés les uns vis à vis des autres par de la mousse de polyuréthane.

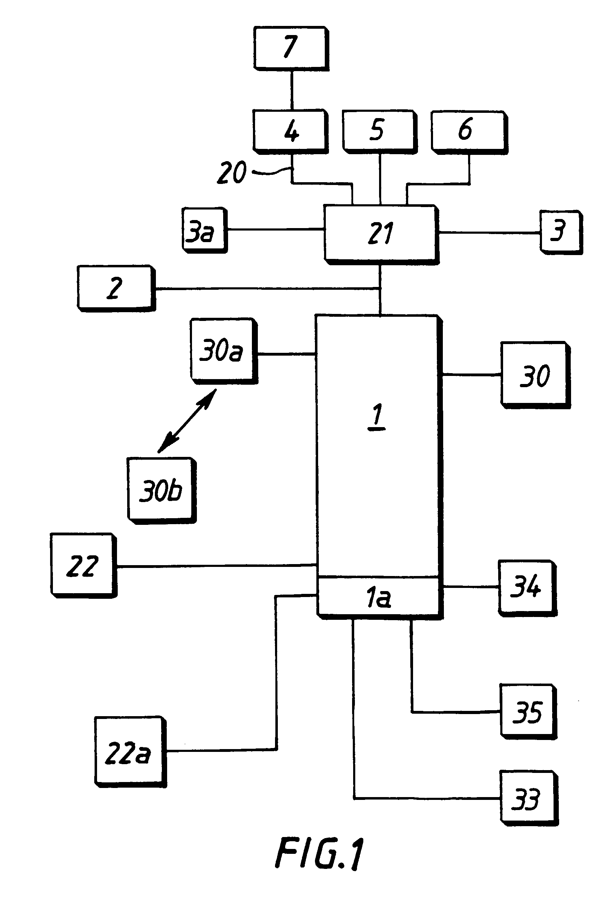

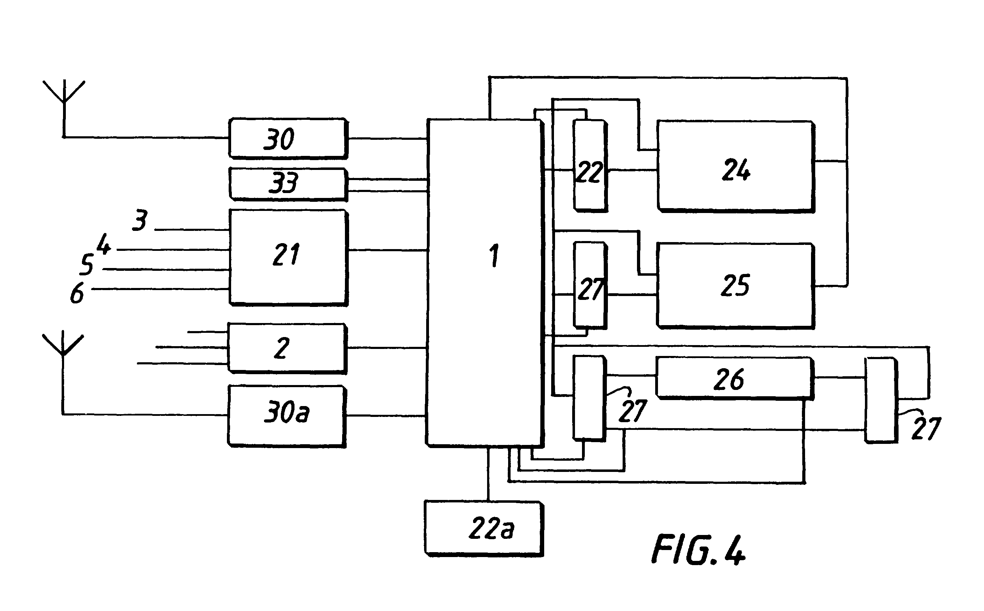

La figure 4 représente schématiquement l'électronique utilisée dans un mode de réalisation de l'invention. L'électronique de la centrale comprend deux cartes, la carte 21 sur laquelle se trouve la partie analogique et les entrées/sorties et une carte dans laquelle se trouve la partie numérique. La partie numérique comprend un certain de nombre circuits intégrés et un microprocesseur 1 associée à une mémoire EPROM 24 incluant le programme à une mémoire vive 25 de gestion des données et à un codeur/décodeur 26. Des portes 27 valident ou non la communication des données. Un relais 22 permet d'agir mécaniquement sur un organe de commande de la moto. Lorsque le système est en route et que le motocycliste décide de s'arrêter, il coupe le moteur avec la clé de contact et à ce moment le microprocesseur 1 ne reçoit plus de tops de bobine 2. Il sait par ailleurs que la moto ne roule pas car le détecteur de roue 3 n'envoie plus d'impulsions. Les impulsions de la bobine 2 permettent au microprocesseur 1 de reconnaître si la moto dispose d'un moteur à deux ou quatre temps. Il est ainsi possible de calculer aisément le nombre de tours par minute. A ce moment, le motocycliste peut déverrouiller le crochet de sécurité 4 sans risquer que le système gonfle les boudins de la combinaison. Le circuit envoie dans la mémoire 25 des informations concernant le trajet. Au moment de repartir, le motocycliste appuie sur la touche de la clé électronique qui peut être l'étage 30a (Fig.1).

Le code étant transmis, le système alarme étant au repos, la centrale 1 passe de la position réception à la position émission pour préparer le dispositif à l'émission en cas de problème. Le motocycliste insère alors la partie 15 mâle dans la partie femelle 14 de l'attache (figure 2) et le microprocesseur 1 sait que un ou deux passagers sont reliés à la moto et, dans ce cas, il autorise le rétablissement de divers organes coupés précédemment. Le motocycliste peut alors démarrer avec mise en mémoire dans la RAM 24 de la date et de l'heure de départ pour se rendre d'un point A à un point B et tout au long du trajet il mémorise la plus haute valeur en fonction du premier tour de roue des vitesses minimale, moyenne et maximale de la moto par des tops venant du détecteur de roue 3. La durée du gonflage, proportionnelle à la vitesse maximale, est obtenue par une prise en considération constante de cette valeur. Si un accident survient durant le trajet le pilote et/ou le passager sont éjectés de la moto, le microprocesseur détecte la mise à la masse d'une broche pour le pilote et d'une seconde broche pour le passager et en fonction de la vitesse il envoie le code de début de gonflage. A l'aide d'un système radio, la première capsule pyrotechnique 9a explose (voir figure 3) et libère l'air comprimé de la bouteille 10 dans les 19 boudins. Puis le microprocesseur envoie le code d'arrêt toujours de la même manière ce qui fait exploser la deuxième capsule 9 qui ferme le circuit d'air. Le microprocesseur inscrit dans la mémoire 25 des différentes données relatives à cet accident.

L'utilisation d'un système à microprocesseur permet d'emmagasiner un nombre important d'informations et éventuellement de les restituer par une sortie 33 de type RS 132, par exemple (figure 1) à un Minitel ( Marque déposée) ou ordinateur à des fins de contrôle par les compagnies d'assurance. Un tel système peut, bien évidemment, servir d'alarme de détection de vol. A cet effet, un système d'alarme peut comprendre une sirène 34 et il est possible de couper l'arrivée d'essence par une électrovanne (non représentée) et l'alimentation de la bobine après un temps déterminé grâce au relais 22.

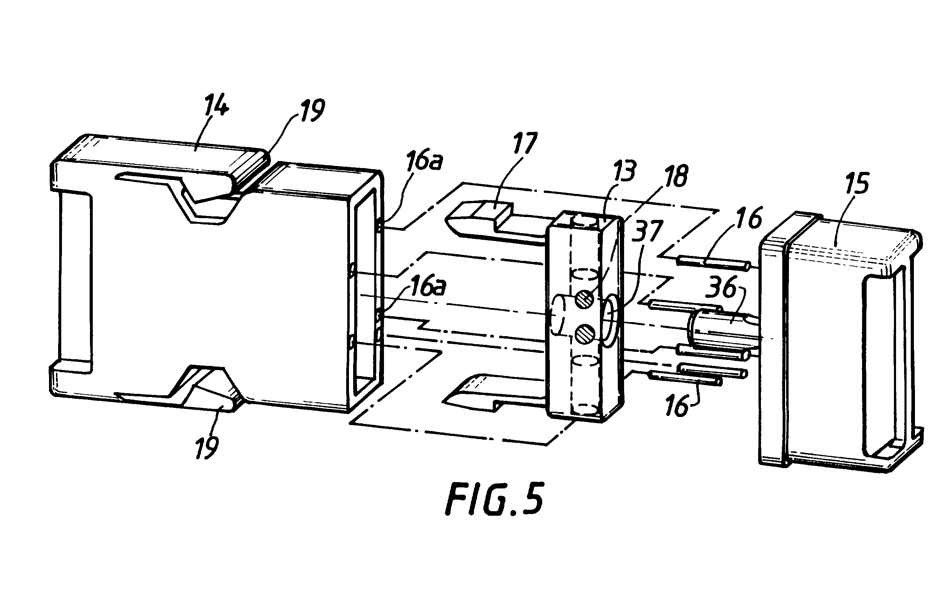

Dans l'exemple qui a été donné ci-dessus, la mise à feu était déclenchée par un signal radio de la moto à la combinaison. Il s'agissait d'un signal simple et robuste. Toutefois, dans certains cas et notamment au voisinage d'installations électriques telles que des transformateurs, il peut se produire de parasites. Aussi, dans un second mode de réalisation, la liaison entre la centrale électronique 1 et la combinaison 7 n'est assurée que par la voie filaire, l'émetteur 30 n'existant plus. Dans ce cas, le microprocesseur applique et maintient au cours du fonctionnement du dispositif, via l'attache, un signal de potentiel déterminé sur une borne de l'étage 8. Si ce signal disparaît, par suite de la rupture de l'attache, la mise à feu intervient. Par sécurité, cette liaison est de préférence doublée. A cet effet, et comme représenté sur la figure 5, le connecteur unique représenté sur les figures 2 est remplacé par un ensemble de trois ou cinq broches 16 pénétrant dans des fiches femelles 16a permettant d'établir un diagnostic continu de la combinaison par le microprocesseur. La fixation des trois parties de l'attache est la même que sur la figure 2. La partie mâle 15 inclût un téton 36, pénétrant dans un orifice 37 de la pièce intermédiaire 13 pour assurer un bon guidage et le maintien de la partie 13 dans la partie 15 au moyen de billes. Bien entendu, dans ce cas il n'y a qu'une seule explosion qui gonfle la combinaison à une pression convenant pratiquement à tous les types d'accidents.

Par ailleurs, dans le système qui vient d'être décrit, le gonflage n'intervient que lorsque le conducteur et/ou son passager est éjecté. Un autre type d'accident fréquent résulte du dérapage de la moto, la force centrifuge étant supérieure au coefficient d'adhérence de la moto sur le sol. Il est souhaitable que le gonflage se produise également dans ce cas. A cet effet, on prévoit, sur la moto un capteur d'inclinaison 3a sur la moto, capteur qui envoie un signal à la centrale lorsque l'inclinaison de la moto excède une valeur prédéterminée impliquant un dérapage quasiment immédiat. Ce mode de fonctionnement est rendu possible par la liaison électronique entre la centrale 1 et la combinaison 7 telle qu'elle vient d'être décrite, l'attache restant dans ce cas bouclée. Dans ces conditions, le gonflage est provoqué si la centrale envoie à l'étage 8 l'information "vitesse élevée" et " perte d'adhérence" via l'attache ou "vitesse élevée" et "séparation de l'attache"

## Revendications

1. Dispositif de sécurité pour motocycliste comprenant une combinaison gonflable (7) s'interposant entre le corps du motocycliste et le sol, le gonflage de la combinaison étant commandé par la mise à feu d'une capsule pyrotechnique, au moins une attache (4), détachable sous une force de traction donnée, reliant la centrale (1) à la combinaison (7),
caractérisé en ce qu'il comprend:
une centrale électronique (1) solidaire de la moto, la rupture de l'attache détachable (4) par application d'une force donnée provoquant la mise à feu de la capsule pyrotechnique en fonction d'un signal temporisé de vitesse reçu par la centrale électronique (1) et réémis vers le dispositif de mise à feu (8,9).

2. Dispositif selon la revendication 1, caractérisé en ce que la centrale électronique comprend un microprocesseur (1) dont une entrée est reliée à un étage analogique numérique (21) sur des entrées duquel sont appliqués les signaux émis d'une part, par la bobine (2) de la moto, par un capteur de roue (3) et par un capteur d'inclinaison de la moto (3a) et, d'autre part, par au moins une attache (4,5,6) reliée à une combinaison gonflable (7), l'attache (4,5,6) incluant un contacteur (16), le microprocesseur détectant la rupture de l'attache et, en fonction des autres paramètres provoquant l'émission d'un signal de mise à feu de la capsule pyrotechnique.

3. Dispositif selon la revendication 2, caractérisé en ce qu'une attache (4, 5, 6) se compose d'une partie mâle (15), d'une partie femelle (14) et d'une partie intermédiaire (13) portant au moins une broche (16), la partie mâle (15) étant retenue dans la partie femelle par des crochets (17) et des pinces (19), la partie intermédiaire (13) étant maintenue dans la partie (14) par des billes (18) armées par des ressorts.

4. Dispositif selon la revendication 1, caractérisé en ce que le microprocesseur (1) constitue par l'intermédiaire d'un relais (22) un antivol nécessitant l'introduction d'un code (30a) de démarrage.

5. Dispositif selon la revendication 1, caractérisé en ce que la centrale (1, 1a) inclût outre le microprocesseur (1) des mémoires (24, 25) enregistrant les principaux paramètres de circulation de la moto, le microprocesseur (1) possédant une sortie (33) du type RS 232.

6. Dispositif selon la revendication 3, caractérisé en ce que la centrale électronique (1) est disposée en un endroit protégé de la moto, le récepteur (8), le système de mise à feu (9, 9a) et la bouteille de gaz étant inclus dans un sac (7a) solidaire de la combinaison (7) et relié à celle-ci, ces éléments étant inclus dans une coque en fibre de verre et isolés les uns des autres par de la mousse plastique.

7. Dispositif selon l'une quelconque des revendications précédentes, caractérisé en ce que après détection de la rupture d'une attache (4, 5, 6), l'émetteur envoie un signal radio en direction du récepteur (8) de la combinaison (7).

8. Dispositif selon la revendication 7, caractérisé en ce que la centrale (1, 1a) émet après rupture de l'attache un signal radio, la durée du gonflage des boudins (12) étant calculée par le microprocesseur (1) en fonction de la vitesse de la moto au moment du choc, le système de mise à feu incluant deux capsules pyrotechniques allumées successivement.

9. Dispositif selon l'une des revendications 1 à 8 caractérisé en ce qu'une attache comprend au moins trois broches (16) de diagnostic du dispositif (9,9a) de la combinaison, la rupture de l'attache produisant la mise à feu et le gonflage de la combinaison.

10. Dispositif selon l'une des revendications précédentes, caractérisé en ce que la combinaison (7) inclût, outre le dispositif de mise à feu (8, 9,) une réserve (10) de gaz comprimé, un répartiteur d'air (11) correspondant avec un ensemble de boudins (12) isolés les uns des autres, munis de clapets anti-retour.

## Patentansprüche

1. Schutzvorrichtung für Motorradfahrer mit einer aufblasbaren Kombination (7), die sich zwischen den Körper des Motorradfahrers und den Boden legt, wobei das Aufblasen der Kombination durch die Zündung einer pyrotechnischen Kapsel gesteuert wird, mit mindestens einer Befestigung (4), die unter einer vorgegebenen Zugkraft lösbar ist und eine Zentrale (1) mit der Kombination (7) verbindet, dadurch gekennzeichnet, dass sie eine fest am Motorrad angeordnete elektronische Zentrale (1) aufweist, und dass der Bruch der lösbaren Befestigung durch Ausübung einer vorgegebenen Kraft die Zündung der pyrotechnischen Kapsel in Abhängigkeit von einem verzögerten Geschwindigkeitssignal auslöst, das von der zentralen Elektronik (1) empfangen und an die Zündvorrichtung (8, 9) weitergesandt wird.

2. Vorrichtung nach Anspruch 1, dadurch gekennzeichnet, dass die elektronische Zentrale einen Mikroprozessor (1) aufweist, von dem ein Eingang an eine analoge numerische Stufe (21) angeschlossen ist, an deren Eingänge einerseits die von der Zündspule (2) des Motorrads, einem Drehzahlmesser (3) und von einem Neigungsmesser des Motorrads (3a) und andererseits die von mindestens einer Befestigung (4, 5, 6) ausgesandten Signale angeschlossen sind, die mit einer aufblasbaren Kombination (7) verbunden ist, wobei diese Befestigung (4, 5, 6) einen Kontaktgeber (16) einschließt und der Mikroprozessor den Bruch der Befestigungseinrichtung detektiert und in Abhängigkeit von anderen Parametern ein Signal zur Zündung der pyrotechnischen Kapsel aussendet.

3. Vorrichtung nach Anspruch 2, dadurch gekennzeichnet, dass eine Befestigung (4, 5, 6) sich aus einem männlichen Teil (15), aus einem weiblichen Teil (14) und aus einem Zwischenteil (13) zusammensetzt, der zumindest einen Stift (16) aufweist, wobei der männliche Teil (15) im weiblichen Teil durch Haken (17) und Klemmen (19) gehalten wird und der Zwischenteil (13) im Teil (14) durch Kugeln (18) gehalten wird, die von Federn vorgespannt sind.

4. Vorrichtung nach Anspruch 1, dadurch gekennzeichnet, dass der Mikroprozessor (1) durch die Zwischenschaltung eines Relais (22) eine Diebstahlsicherung bildet, die die Einführung eines Startcodes (30a) erforderlich macht.

5. Vorrichtung nach Anspruch 1, dadurch gekennzeichnet, dass die Zentrale (11a) außer dem Mikroprozessor Speicher (24, 25) aufweist, welche die wesentlichsten Parameter des Betriebes des Motorrads registrieren und dass der Mikroprozessor (1) einen Ausgang (33) des Typs RS 232 besitzt.

6. Vorrichtung nach Anspruch 3, dadurch gekennzeichnet, dass die elektronische Zentrale (1) in einer geschützten Lage des Motorrads angeordnet ist, dass der Empfänger (8) des Zündsystems (99a) und die Gasflasche in einem fest mit der Kombination (7) verbundenen Beutel (7a) eingeschlossen sind, wobei diese Teile in einer Schale aus Glasfasern eingeschlossen und gegeneinander durch einen Kunststoffschaum isoliert sind.

7. Vorrichtung nach einem der vorhergehenden Ansprüche, dadurch gekennzeichnet, dass nach dem Feststellen eines Bruches einer Befestigung (4, 5, 6) der Sender ein Funksignal in Richtung zum Empfänger (8) der Kombination (7) aussendet.

8. Vorrichtung nach Anspruch (7), dadurch gekennzeichnet, dass die Zentrale (11a) nach einem Bruch einer Befestigung ein Funksignal aussendet, dass die Aufblasdauer der Wülste (12) durch den Mikroprozessor (1) in Abhängigkeit von der Geschwindigkeit des Motorrads im Moment des Aufpralls berechnet wird und dass das Zündsystem drei pyrotechnische Kapseln umfasst, die nacheinander gezündet werden.

9. Vorrichtung nach einem der Ansprüche 1 bis 8, dadurch gekennzeichnet, dass eine Befestigung mindestens drei Stifte (16) zur Diagnose der Vorrichtung (99a) der Kombination umfasst, und dass der Bruch der Befestigung die Zündung und das Aufblasen der Kombination bewirkt.

10. Vorrichtung nach einem der vorhergehenden Ansprüche, dadurch gekennzeichnet, dass die Kombination (7) außer der Zündeinrichtung (8, 9) auch einen Speicher (10) mit Druckgas, sowie einen Luftverteiler (11) besitzt, der mit einer Mehrzahl von Wülsten (12) in Verbindung steht, die voneinander getrennt mit Rückschlagventilen ausgerüstet sind.

## Claims

1. A safety device for a motorcyclist, the device comprising an inflatable suit (7) interposed between the body of the motorcyclist and the ground, inflation of the suit being controlled by firing a pyrotechnic capsule, at least one connector (4) that is detachable under a given traction force, connecting the control unit (1) to the suit (7),
the device being characterized in that it comprises:
an electronic control unit (1) secured to the motorbike, rupture of the detachable connector (4) by application of a given force causing the pyrotechnic capsule to be fired as a function of a timed speed signal received by the electronic control unit (1) and retransmitted to the firing device (8, 9).

2. A device according to claim 1, characterized in that the electronic control unit comprises a microprocessor (1) having an input that is connected to an analog/digital stage (21) whose inputs receive the signals issued firstly by the coil (2) of the motorbike, by a wheel sensor (3), and by a tilt sensor (3a) of the motorbike, and secondly by at least one connection (4, 5, 6) connected to an inflatable suit (7), the connection including a contactor (16), the microprocessor detecting rupture of the connection and, as a function of the other parameters, causing the transmission of a signal for firing the pyrotechnic capsule.

3. A device according to claim 2, characterized in that a connection (4, 5, 6) comprises a male portion (15), a female portion (14), and an intermediate portion (13) including at least one pin (16), the male portion (15) being retained in the female portion by hooks (17) and by catches (19), the intermediate portion (13) being held in the portion (14) by balls (18) loaded by springs.

4. A device according to claim 1, characterized in that the microprocessor (1) operates by means of a relay (22) to constitute an antitheft device requiring a starting code (30a) to be input.

5. A device according to claim 1, characterized in that the control unit (1, 1a) includes, in addition to the microprocessor (1), memories (24, 25) for storing the main parameters of motorcycle travel, the microprocessor (1) including an RS 232 type outlet (33).

6. A device according to claim 3, characterized in that the electronic control unit (1) is disposed at a protected location of the motorbike, the receiver (8), the firing system (9, 9a), and the gas cylinder being included in a bag (7a) secured to the suit (7) and connected thereto, said elements being included in a fiberglass shell and being isolated from one another by plastics foam.

7. A device according to any preceding claim, characterized in that after rupture of a connection (4, 5, 6) has been detected, the transmitter sends a radio signal to the receiver (8) of the suit (7).

8. A device according to claim 7, characterized in that the control unit (1, 1a) transmits a radio signal after the connection has been ruptured, the duration of chamber inflation (12) being calculated by the microprocessor (1) as a function of the speed of the motorbike at the time of the shock, the firing system including two pyrotechnic capsules that are fired in succession.

9. A device according to any one of claims 1 to 8, characterized in that a connection includes at least three pins (16) for diagnosing the system (9, 9a) of the suit, rupture of the connection causing the suit to be fired and inflated.

10. A device according to any preceding claim, characterized in that the suit (7) includes, in addition to the firing system (8, 9), a supply (10) of compressed gas and an air distributor (11) in communication with a set of chambers (12) that are isolated from one another, being provided with non-return valves.
